# EUROPÄISCHE PATENTSCHRIFT

(11) **EP 4 051 955 B1**
(45) Veröffentlichungstag und Bekanntmachung des Hinweises auf die Patenterteilung: **30.11.2022**
(21) Anmeldenummer: 21735868.8
(22) Anmeldetag: 17.06.2021
(51) Int. Cl.: F21S 43/145, B60Q 1/52, B60Q 9/00, B60R 21/0134, B60Q 1/44

(54) **VERFAHREN ZUM BETRIEB EINER HECKLEUCHTE EINES KRAFTFAHRZEUGS UND KRAFTFAHRZEUG**
METHOD FOR OPERATING A TAILLIGHT OF A MOTOR VEHICLE, AND MOTOR VEHICLE
PROCÉDÉ DE FONCTIONNEMENT D'UN FEU ARRIÈRE D'UN VÉHICULE À MOTEUR ET VÉHICULE AUTOMOBILE

(30) Priorität: 05.08.2020 DE 102020120596
(43) Veröffentlichungstag der Anmeldung: 07.09.2022
(73) Patentinhaber: Audi AG, 85045 Ingolstadt (DE)
(72) Erfinder: SCHMIDT, Valentin, 86633 Neuburg a.d. Donau (DE); HALBIG, Daniel, 93339 Riedenburg (DE); REITER, Ernst, 85051 Ingolstadt (DE); HORST, Roman, 85049 Ingolstadt (DE); HAHN, Viktor, 85049 Ingolstadt (DE)
(74) Vertreter: Lindner Blaumeier Patent- und Rechtsanwälte
(86) Internationale Anmeldenummer: PCT/EP2021/066342
(87) Internationale Veröffentlichungsnummer: WO 2022/028760

(56) Entgegenhaltungen:
- EP-A1- 3 093 192
- EP-A1- 3 190 005
- EP-A1- 3 514 012
- EP-B1- 3 093 192
- WO-A1-2004/005962
- DE-A1-102005 054 497
- DE-A1-102009 043 953
- DE-A1-102014 005 423
- DE-A1-102016 224 147
- DE-U1-202008 017 397
- DE-U1-202010 013 761
- US-A1- 2004 012 488
- US-A1- 2006 164 222
- US-A1- 2007 159 311
- US-A1- 2010 315 216
- US-A1- 2017 330 464
- US-A1- 2019 051 184
- US-A1- 2019 193 626

## Beschreibung

Die Erfindung betrifft ein Verfahren zum Betrieb einer Heckleuchte eines Kraftfahrzeugs, wobei die Heckleuchte, insbesondere neben einer wenigstens einer weiteren Lichtfunktion zugeordneten Funktionslichtquelle, eine einer Schlusslichtfunktion zugeordnete Schlusslichtquelle mit mehreren, bezüglich des Betriebs und der Helligkeit unabhängig ansteuerbaren Leuchtbereichen aufweist, wobei durch wenigstens einen Umgebungssensor des Kraftfahrzeugs andere, nachfolgende Verkehrsteilnehmer im Rückraum des Kraftfahrzeugs beschreibende Sensordaten aufgenommen werden. Daneben betrifft die Erfindung ein Kraftfahrzeug.

Kraftfahrzeuge weisen üblicherweise eine Mehrzahl an Außenleuchten auf, die wenigstens teilweise zur besseren Sichtbarkeit des Kraftfahrzeugs bei Tag und/oder bei Nacht, zur Sichtverbesserung eines Insassen und/oder zur Signalgabe an andere Verkehrsteilnehmer ausgestaltet sind. Bezüglich dieser Außenleuchten ist es insbesondere auch bekannt, kombinierte bzw. integrierte Außenleuchten für mehrere Lichtfunktionen vorzusehen. Beispielsweise ist es neben der Integration eines Tagfahrlichts und/oder eines Fahrtrichtungsanzeigers in einen Frontscheinwerfer auch bekannt, Heckleuchten vorzusehen, die neben einer Schlusslichtfunktion auch eine Bremslichtfunktion und/oder eine Fahrtrichtungsanzeigerfunktion und/oder weitere Lichtfunktionen realisieren können. Dabei werden Außenleuchten an Kraftfahrzeugen insbesondere so ausgelegt, dass die gegebenenfalls lokalen bzw. länderspezifischen gesetzlichen Anforderungen an Lichtstärke, Anbauhöhe, Schaltlogiken und weitere Parameter, die zusammenfassend als Lichtwerte bezeichnet werden können, eingehalten werden.

Die Entwicklung, mehrere Lichtfunktionen in einer einzigen Außenleuchte zu integrieren, wird weiter gefördert durch neue Lichttechnologien, die Leuchtdioden (LEDs), organische Leuchtdioden (OLEDs) und/oder Laser nutzen. Insbesondere kann durch die Nutzung von organischen Leuchtdioden ein ansprechendes Außendesign mit einer variablen Einsetzbarkeit verbunden werden. So ist es beispielsweise bekannt, sogenannte segmentierte OLED zu verwenden, bei denen mehrere unabhängig ansteuerbare Segmente einer Leuchtfläche einer entsprechenden Lichtquelle der Außenleuchte vorgesehen sind. Insbesondere ist es auch möglich, die einzelnen Segmente unabhängig zu dimmen, das bedeutet, in ihrer Helligkeit durch entsprechende Ansteuerung zu regeln, was beispielsweise durch Pulsweitenmodulation geschehen kann. Bekannt sind neben OLEDs auch sogenannte LED-Matrizen, die aus einer Vielzahl matrixartig angeordneter LEDs gebildet werden. Hierbei können beispielsweise Leuchtbereiche definiert werden, die durch einzelne LEDs und/oder mehrere LEDs gebildet werden.

Bei Heckleuchten als Außenleuchten solcher Art ist meist eine Steuereinrichtung vorgesehen, beispielsweise ein Steuergerät, das die Lichtquellen bzw. Leuchtbereiche der Heckleuchten ansteuert, beispielsweise dann, wenn gebremst wird, eine Bremslichtquelle und/oder dann, wenn ein entsprechender Hebel im Kraftfahrzeug betätigt wurde, eine Fahrtrichtungsanzeigerlichtquelle (Fahrtrichtungsanzeiger oder "Blinker"). Der Aktivierungszustand eines Schlusslichts und somit der zugeordneten Schlusslichtfunktion ergibt sich üblicherweise aus einer insgesamten Außenlichtfunktion, beispielsweise der Aktivierung von Abblendlicht, Positionslicht oder dergleichen. Dabei wurde im Stand der Technik bereits vorgeschlagen, automatisch verschiedene Betriebsmodi einer Beleuchtungsanlage des Kraftfahrzeugs, zu der auch die Heckleuchten gehören können, in Abhängigkeit von der Umgebungshelligkeit zu wählen. Beispielsweise kann eine Lichtautomatik bei abnehmender Umgebungshelligkeit auf Abblendlicht/Positionslicht umschalten, wobei der Betrieb von Fahrtrichtungsanzeiger und Bremslicht unverändert bleibt. Insbesondere weisen die Lichtfunktionen bei bekannten Kraftfahrzeugen üblicherweise gleichbleibende Helligkeit (Intensität) auf, so dass der Sehkomfort anderer Verkehrsteilnehmer nicht berücksichtigt wird.

DE 10 2016 224 147 A1 betrifft ein System zur distanz- und geschwindigkeitssensitiven Steuerung der Helligkeit eines von einer Heckleuchte eines Ego-Fahrzeugs abgestrahlten Lichts. Dort wird vorgeschlagen, die Sicherheit im Straßenverkehr durch eine automatisierte Steuerung der Lichtstärke von wenigstens einer Heckleuchte eines Ego-Fahrzeugs aufgrund einer Reaktion auf (Interaktion mit) Gegebenheiten in der Umwelt des Ego-Fahrzeugs erheblich zu verbessern. Die Anwesenheit eines anderen Verkehrsteilnehmers kann dabei durch eine geeignete Sensorik detektiert werden. So kann insbesondere einer Blendung wirksam entgegengewirkt werden.

DE 10 2012 024 666 A1 betrifft ein Verfahren und eine Vorrichtung zum Steuern einer Lichtverteilung einer Leuchte eines Fahrzeugs. Dabei wird vorgeschlagen, dass die Ausgangslichtverteilung einer Leuchte verändert wird, wenn eine die Wetterverhältnisse in der Umgebung des Fahrzeugs anzeigende Qualität von Messsignalen unterhalb eines Schwellenwerts liegt. Die Leuchte kann eine Heckleuchte sein. Nachdem viele Auffahrunfälle bei schlechten Sichtverhältnissen dadurch ausgelöst werden, dass vorausfahrende Fahrzeuge kaum sichtbar sind, ist es besonders vorteilhaft, die Heckleuchte anzusteuern, um eine verbesserte Sichtbarkeit des Fahrzeugs bereitzustellen.

DE 10 2004 002 334 A1 offenbart eine Steuerschaltung für die Beleuchtungsanlage eines Kraftfahrzeuges, wobei, um Irritationen nachfolgender Verkehrsteilnehmer durch das Aufleuchten des Rücklichts zu vermeiden, das Rücklicht entsprechend einer zeitlich abnehmenden Umgebungshelligkeit von einem Dimmer ansteuerbar sein kann. Es wird somit ein langsames Aufleuchten des Rücklichts vollzogen, welches nicht mit dem unmittelbar mit voller Intensität aufleuchtenden Bremslicht verwechselt werden kann.

Aus DE 20 2010 013 761 U1 ist ein Abstandswarnsystem für ein Kraftfahrzeug bekannt, bei dem mittels Radarsensoren ein Abstand zu einem rückwärtigen Fahrzeug bestimmt wird. In Abhängigkeit hiervon wird ein optisches Signal ausgegeben, etwa ein Bremslicht. Hierbei ist insbesondere vorgesehen, dass eine Intensität des Signals und/oder das Ausmaß einer aktiven Fläche der Ausgabe von dem ermittelten Abstand abhängt.

EP 3 514 012 A1 offenbart ein Konzept im Zusammenhang mit einer mittels einer Heckleuchte eines Kraftfahrzeugs ausgegebenen Warnung bei Unterschreiten eines Sicherheitsabstandes zwischen aufeinanderfolgenden Fahrzeugen. Zur Ausgabe der Warnung erfolgt eine Aktivierung einer Lichtfunktion der Heckleuchte, etwa eine Wiederholblinkfunktion oder eine Bremslichtfunktion oder, sofern eine dieser Lichtfunktionen aktuell aktiv ist, eine kurzzeitige Deaktivierung dieser Funktion.

Nichts desto trotz existieren Fahrsituationen, in denen es wünschenswert wäre, eine Erkennung des eigenen Kraftfahrzeugs durch andere Verkehrsteilnehmer in verbessertem Maße sicherzustellen, insbesondere also andere Verkehrsteilnehmer auf das eigene Kraftfahrzeug zu sensibilisieren. Dies ist mit den bislang bekannten Ansätzen zur Steuerung von Heckleuchten nicht möglich.

Der Erfindung liegt daher die Aufgabe zugrunde, eine Betriebsmöglichkeit für Heckleuchten anzugeben, die eine verbesserte Sensibilisierung anderer Verkehrsteilnehmer auf das eigene Kraftfahrzeug ermöglicht.

Zur Lösung dieser Aufgabe ist bei einem Verfahren der eingangs genannten Art erfindungsgemäß vorgesehen, dass bei Erfüllung wenigstens eines die Sensordaten auswertenden und die Anwesenheit wenigstens eines weiteren Verkehrsteilnehmers innerhalb eines vordefinierten Abstandsbereichs zum Heck des Kraftfahrzeugs überprüfenden Zuschaltkriteriums ein helligkeitserhöhender Schaltvorgang, insbesondere ein Zuschalten und/oder ein Aufdimmen, eines zuvor nicht oder mit geringerer Helligkeit als wenigstens ein anderer, erster Leuchtbereich betriebenen zweiten Leuchtbereichs der Schlusslichtquelle derart vorgenommen wird, dass die ausgesendete Gesamthelligkeit eines wenigstens die Schlusslichtquelle umfassenden Anteils der Heckleuchte konstant bleibt.

Im Rahmen einer ersten Ausgestaltung des erfindungsgemäßen Verfahrens ist vorgesehen, dass der Anteil nur die Schlusslichtquelle umfasst, wobei zur Kompensierung der Helligkeitserhöhung des wenigstens einen zweiten Leuchtbereichs wenigstens ein erster Leuchtbereich in seiner Helligkeit reduziert wird.

Im Rahmen einer zweiten Ausgestaltung des erfindungsgemäßen Verfahrens ist vorgesehen, dass der Anteil neben der Schlusslichtquelle die oder wenigstens eine Funktionslichtquelle der Heckleuchte umfasst, wobei zur Kompensierung der Helligkeitserhöhung des wenigstens einen zweiten Leuchtbereichs die wenigstens eine Funktionslichtquelle in ihrer Helligkeit reduziert wird.

Es wird mithin vorgeschlagen, zur verbesserten Sensibilisierung anderer Verkehrsteilnehmer dann, wenn ein derartiger anderer Verkehrsteilnehmer, der dem eigenen Kraftfahrzeug nachfolgt (mithin dieselbe Fahrtrichtung aufweist), in einen vordefinierten Abstandsbereich im Rückraum des Kraftfahrzeugs eintritt bzw. dort detektiert wird, einen bislang nicht betriebenen Leuchtbereich der Schlusslichtquelle zuzuschalten bzw. einen zuvor nur äußerst dunkel betriebenen Leuchtbereich in seiner Helligkeit zu erhöhen, wobei das Zuschalten bislang nicht genutzter Leuchtbereiche bevorzugt ist. Dabei wird allerdings die Gesamthelligkeit wenigstens eines Anteils der Heckleuchte konstant gehalten, beispielsweise, indem für einen anderen Leuchtbereich der Schlusslichtquelle die Helligkeit reduziert wird, insbesondere aber, indem die Kompensierung durch wenigstens eine weitere Funktionslichtquelle der Heckleuchte vorgenommen wird, worauf noch genauer eingegangen werden wird. Nachdem viele Kraftfahrzeuge üblicherweise zwei Heckleuchten aufweisen, wird das Verfahren zweckmäßigerweise selbstverständlich bevorzugt für beide Heckleuchten eingesetzt.

Ein derartiger Schaltvorgang kann als adaptive Flächenvariation bezeichnet werden und zielt auf eine Zuschaltung bzw. ein Aufdimmen von Schlusslichtanteilen bei einem erkannten, nachfolgenden Verkehrsteilnehmer ab, so dass eine Dynamik entsteht, die zu einer verbesserten Sensibilisierung des Verkehrsteilnehmers führt. Dabei kann insbesondere vorgesehen sein, dass bei nach einer Erfüllung des Zuschaltkriteriums eintretender Nichterfüllung des Zuschaltkriteriums wieder in den vorherigen Betriebszustand, insbesondere also einen Normalbetriebszustand, zurückgeschaltet wird.

Bei der Heckleuchte handelt es sich, wie bereits angedeutet, bevorzugt um eine mehrere Lichtfunktionen integrierende Heckleuchte, wobei mit besonderem Vorteil die wenigstens eine weitere Lichtfunktion aus der Gruppe umfassend eine Bremslichtfunktion und/oder eine Fahrtrichtungsanzeigefunktion gewählt ist. Somit kann mit der Heckleuchte eine Baueinheit bereitgestellt werden, die neben der Schlusslichtfunktion wenigstens auch eine Fahrtrichtungsanzeigerfunktion und/oder eine Bremslichtfunktion bereitstellt.

In der ersten, alternativen Ausgestaltung der vorliegenden Erfindung ist vorgesehen, dass der Anteil nur die Schlusslichtquelle umfasst, wobei zur Kompensierung der Helligkeitserhöhung des wenigstens einen zweiten Leuchtbereichs der wenigstens eine erste Leuchtbereich in seiner Helligkeit reduziert wird. Dabei ist es insbesondere denkbar, dass die Helligkeit aller ersten Leuchtbereiche gleichmäßig zur Kompensation der Helligkeitserhöhung des wenigstens einen zweiten Leuchtbereichs erniedrigt werden. In einer vorteilhaften Ausgestaltung kann vorgesehen sein, dass die Helligkeitserhöhung bezüglich des wenigstens einen zweiten Leuchtbereichs auf eine Zielhelligkeit erfolgt, die geringer als die vorherige Helligkeit der ersten Leuchtbereiche war, wobei zur Kompensation die Helligkeit aller ersten Leuchtbereiche gleichmäßig reduziert wird, insbesondere derart, dass die ersten Leuchtbereiche noch immer heller leuchten als der wenigstens eine zweite Leuchtbereich.

Diese Ausgestaltung begründet sich darauf, dass es bei der vorliegenden Erfindung hauptsächlich um eine Sensibilisierung anderer Verkehrsteilnehmer auf das eigene Kraftfahrzeug geht, wozu bereits das Zuschalten eines bislang ausgeschalteten zweiten Leuchtbereichs mit eher geringer Helligkeit ausreicht, da auf diese Weise eine Dynamik entsteht, die den Blick eines Fahrers des weiteren Verkehrsteilnehmers bzw. des weiteren Verkehrsteilnehmers an sich auf das erfindungsgemäße Kraftfahrzeug richtet. Hierbei ist es beispielsweise denkbar, dass die Zielhelligkeit maximal 10 % der vorherigen Helligkeit der ersten Leuchtbereiche beträgt.

Denkbar ist es im Rahmen der vorliegenden Erfindung auch, dass der wenigstens eine erste Leuchtbereich und der wenigstens eine zweite Leuchtbereich dieselbe Gesamtfläche aufweisen, wobei für den Schaltvorgang ihre Helligkeiten getauscht werden, insbesondere in einem periodisch wiederholten Schaltvorgang. Werden beispielsweise erste Leuchtbereiche mit 100 % Helligkeit betrieben, die zweiten Leuchtbereiche aber vor dem ersten Schaltvorgang nur mit halber Helligkeit, insbesondere 50 %, und entsprechen sich aber die Gesamtflächen der Leuchtbereiche, so kann die Gesamthelligkeit der Schlusslichtquelle auch dadurch konstant gehalten werden, dass die Helligkeiten einfach ausgetauscht werden, beispielsweise in einer periodischen Abfolge 50:100, 100:50, 50:100, .... Grundsätzlich ist es auch denkbar, die zweiten Lichtquellen an- und die ersten Lichtquellen auszuschalten, um den Schaltvorgang zu realisieren, dies ist jedoch weniger bevorzugt, da es einen gegebenenfalls zu starken Effekt darstellen würde.

Für diese erste Erfindungsalternative sei darauf hingewiesen, dass eine derartige Funktion auch vorteilhaft mit einer Dimmfunktion der weiteren Lichtfunktion kombiniert werden kann. Das bedeutet, gemäß der vorliegenden Erfindung kann vorgesehen sein, dass zusätzlich zu der erzeugten Dynamik in der Schlusslichtquelle eine adaptive Intensitätsvariation bei Objektdetektion erfolgt, bei der bei Erfüllung einer ebenso die Sensordaten auswertenden Dimmbedingung, die mit dem Zuschaltkriterium übereinstimmen kann, die Helligkeit der wenigstens einer weiteren Lichtfunktion zugeordneten Funktionslichtquelle gegenüber einem Normalbetriebsmodus (also insbesondere einer Normalhelligkeit) reduziert wird, insbesondere mithin die Bremslichtfunktion und/oder die Fahrtrichtungsanzeigerfunktion heruntergedimmt werden. Somit kann die Bremslichtintensität und/oder Fahrtrichtungsanzeigerintensität bei einem erkannten, nachfolgenden Verkehrsteilnehmer reduziert werden, insbesondere, um eine potentielle Blendung dieses anderen Verkehrsteilnehmers zu vermeiden oder wenigstens zu reduzieren. Die reduzierte Intensität des Bremslichts und/oder des Fahrtrichtungsanzeigerlichts bei erkanntem Hintermann ist somit dem Sehkomfort zuträglich. Gleichzeitig kann der nachfolgende Verkehr jedoch dank des Schaltvorgangs auf das eigene Kraftfahrzeug sensibilisiert werden. Auf diese Art und Weise kann also eine gegebenenfalls durch die Erhöhung des Sehkomforts gegebene reduzierte Sensibilisierung auf das eigene Kraftfahrzeug synergetisch kompensiert oder sogar überkompensiert werden durch den Schaltvorgang, insbesondere das Zuschalten bislang nicht betriebener zweiter Leuchtbereiche.

Im Rahmen der vorliegenden Erfindung ist es allgemein auch möglich, dass nach Zuschalten/Aufdimmen des wenigstens einen zuvor nicht betriebenen/dunkler betriebenen zweiten Leuchtbereichs alle Leuchtbereiche der Schlusslichtquelle gleich hell betrieben werden, was für eine harmonische, nicht von anderen Lichtfunktionen ablenkende Erscheinung des Schlusslichts sorgt.

In der alternativen, zweiten Ausgestaltung der vorliegenden Erfindung ist vorgesehen, dass der Anteil neben der Schlusslichtquelle die oder die wenigstens eine Funktionslichtquelle umfasst. Dabei wird zweckmäßigerweise auch dann, wenn das Aktivieren der Funktionslichtquelle erst mit dem Schaltvorgang erfolgt, wie noch genauer erläutert werden wird, bei der Aufrechterhaltung der Gesamtintensität mit dem Normalwert der Helligkeit, mit der die Funktionslichtquelle ohne Erfüllung des Zuschaltkriteriums betrieben würde, gearbeitet.

Konkret kann nämlich vorgesehen sein, dass die Helligkeitserhöhung durch den Schaltvorgang ausschließlich durch eine Helligkeitsreduzierung der Funktionslichtquelle kompensiert wird. Das hat den massiven Vorteil, dass die bezüglich der ersten Erfindungsvariante erwähnte Kombination von Maßnahmen - Dimmen der weiteren Lichtfunktion, Dynamik in der Schlusslichtfunktion - zweckmäßig derart kombiniert werden können, dass sich am Gesamthelligkeitseindruck nichts ändert. Nachdem die Helligkeit jedoch insgesamt breiter verteilt ist, werden Blendungseffekte dennoch deutlich reduziert und der Sehkomfort erhöht, während zusätzlich der Betrachter verbessert auf das eigene Kraftfahrzeug sensibilisiert wird. Beispielsweise kann bei aktivem Bremslicht vorgesehen sein, dass dann, wenn ein weiterer, nachfolgender Verkehrsteilnehmer in den vordefinierten Abstandsbereich eintritt, ein bislang nicht betriebener zweiter Leuchtbereich zugeschaltet wird, insbesondere auf dieselbe Helligkeit, mit der die ersten Leuchtbereiche der Schlusslichtleuchte bereits betrieben werden, wobei die Helligkeit der Bremslichtquelle um die entsprechend im Schlusslicht hinzugekommene Helligkeit reduziert wird. Auch insgesamt kann es denkbar sein, dass nach dem Zuschalten alle ersten und zweiten Leuchtbereiche mit derselben Helligkeit betrieben, wobei, nachdem insbesondere der Bremslichtfunktion und der Fahrtrichtungsanzeigerfunktion eine Hinweis- und Warnfunktion zukommt, zweckmäßigerweise sichergestellt wird, dass die Helligkeit dieser Lichtfunktionen größer als die Helligkeit der Schlusslichtfunktion bleibt. Dies ist aber üblicherweise problemlos möglich, da Fahrtrichtungsanzeiger und/oder Bremslichter ohnehin deutlich heller als Schlusslichter betrieben werden, so dass ein insbesondere mit geringer Helligkeit zugeschalteter zweiter Leuchtbereich des Schlusslichts unproblematisch gewählt werden kann.

In einer zweckmäßigen Weiterbildung der vorliegenden Erfindung kann vorgesehen sein, dass das Zuschaltkriterium nur bei zusätzlich festgestelltem Betrieb wenigstens der wenigstens einen weiteren Lichtfunktion der Heckleuchte als erfüllt bewertet wird. Das bedeutet, die Sensibilisierung kann auf Fälle beschränkt werden, in denen mit besonderem Vorteil das eigene Kraftfahrzeug ohnehin einen Hinweis und/oder eine Warnung über die weitere Lichtfunktion ausgeben möchte. In diesem Fall wird die Wirkung der Lichtfunktion durch die Sensibilisierung mittels der durch die Helligkeitserhöhung des zweiten Leuchtsegments gegebene Dynamik unterstrichen und zweckmäßig ergänzt, so dass die Sicherheit diesbezüglich nochmals deutlich erhöht werden kann.

Im Rahmen der vorliegenden Erfindung kann das Zuschaltkriterium auch weitere Randbedingungen berücksichtigen, die vorliegen sollen, um die Sensibilisierung auf das eigene Kraftfahrzeug vorzunehmen. Das bedeutet, gemäß einer Weiterbildung der Erfindung kann vorgesehen sein, dass durch das Zuschaltkriterium zusätzlich wenigstens eine auf das eigene Kraftfahrzeug und/oder den Verkehrsteilnehmer und/oder Umgebungsbedingungen bezogene Zusatzbedingung überprüft wird. Konkret kann in diesem Zusammenhang vorgesehen sein, dass die wenigstens eine Zusatzbedingung überprüft,
- ob die Relativgeschwindigkeit des Verkehrsteilnehmers zu dem eigenen Kraftfahrzeug innerhalb eines ersten Geschwindigkeitsintervalls liegt, und/oder
- ob die Geschwindigkeit des eigenen Kraftfahrzeugs innerhalb eines zweiten Geschwindigkeitsintervalls liegt, und/oder
- ob eine Heckklappe des Kraftfahrzeugs geschlossen ist und/oder
- ob die Umgebungshelligkeit innerhalb eines Umgebungshelligkeitsintervalls liegt.

Der Einsatz des erfindungsgemäßen Verfahrens ist dabei besonders zweckmäßig in Bereichen niedriger Geschwindigkeit und/oder niedriger Relativgeschwindigkeit zu dem nachfolgenden Verkehrsteilnehmer. Niedrige Absolutgeschwindigkeiten sprechen dafür, dass eine komplexere Verkehrssituation vorliegt, in der es relevanter sein kann, auf das eigene Kraftfahrzeug zu sensibilisieren, insbesondere dann, wenn das eigene Kraftfahrzeug über eine weitere Lichtfunktion relevante Signale ausgibt. Ist nur eine geringe Relativgeschwindigkeit gegeben, ist davon auszugehen, dass der nachfolgende Verkehrsteilnehmer längere Zeit im Bereich des Rückraums des Kraftfahrzeugs befindlich sein wird, insbesondere auch schwerer wahrnehmbar durch den Fahrer des eigenen Kraftfahrzeugs. Auch hier ist mithin eine Sensibilisierung besonders zweckmäßig. Beispielsweise kann überprüft werden, ob die Relativgeschwindigkeit und/oder die Geschwindigkeit des eigenen Kraftfahrzeugs unterhalb eines Geschwindigkeitsschwellwerts liegen, so dass das jeweilige Geschwindigkeitsintervall beispielsweise von Null bis zum jeweiligen Geschwindigkeitsschwellwert reichen kann, um niedrigere Geschwindigkeiten abzugreifen.

Auch eine Berücksichtigung der Umgebungshelligkeit kann im Rahmen der vorliegenden Erfindung zweckmäßig sein, um die allgemein gegebene Erkennbarkeit des eigenen Kraftfahrzeugs über die Heckleuchte zu beurteilen und entsprechend einfließen zu lassen. Ist beispielsweise bereits starke Dunkelheit gegeben, kann davon ausgegangen werden, dass andere Verkehrsteilnehmer bereits hinreichend auf das eigene Kraftfahrzeug sensibilisiert sind.

Hierzu kommen andere denkbare Zusatzbedingungen bzw. Randbedingungen, beispielsweise auch grundlegende Randbedingungen wie eine Überprüfung, ob die Zündung aktiv ist, die Heckklappe geschlossen ist und dergleichen. Diesbezüglich kann das Zuschaltkriterium letztlich beliebig ergänzt und erweitert werden.

In zweckmäßiger Weiterbildung der vorliegenden Erfindung kann ferner vorgesehen sein, dass der Schaltvorgang des wenigstens einen zweiten Leuchtbereichs auf eine erhöhte, vorgegeben und/oder in Abhängigkeit von einem aus den Sensordaten bestimmten Abstand zu dem Verkehrsteilnehmer ermittelte Zielhelligkeit und/oder mit einer vorgegebenen und/oder in Abhängigkeit von einem aus den Sensordaten bestimmten Abstand zu dem Verkehrsteilnehmer ermittelten Dimmgeschwindigkeit erfolgt. Im Rahmen der vorliegenden Erfindung ist es mithin auch weitergehend möglich, den vorgeschlagenen Sensibilisierungsvorgang auf die konkret vorliegende Verkehrssituation abzustimmen, beispielsweise indem ein Abstand zu dem nachfolgenden Verkehrsteilnehmer, der aus den Sensordaten bestimmt werden kann, berücksichtigt wird und in Abhängigkeit dieses Abstands eine Zielhelligkeit gewählt werden kann. Gleichzeitig oder alternativ kann auch Einfluss auf die Dimmgeschwindigkeit genommen werden, mithin beeinflusst werden, wie abrupt das Zuschalten bzw. allgemein der helligkeitserhöhende Schaltvorgang ablaufen soll. Dabei muss die Zielhelligkeit und/oder die Dimmgeschwindigkeit nicht zwangsläufig in Abhängigkeit von der aktuellen Verkehrssituation, insbesondere beschrieben durch die Sensordaten, gewählt werden, sondern es ist auch denkbar, diese parametrierbar zu gestalten, beispielsweise seitens des Benutzers und/oder eines Herstellers wählbar. Neben auf den nachfolgenden Verkehrsteilnehmer bezogenen Größen können die Zielhelligkeit und/oder die Dimmgeschwindigkeit auch abhängig von weiteren Betriebsgrößen des Kraftfahrzeugs und/oder Verkehrssituationsgrößen, beispielsweise einer Umgebungshelligkeit, anpassbar sein.

Zweckmäßigerweise können die ersten und die zweiten Leuchtbereiche durch Segmente wenigstens einer segmentierten OLED realisiert sein. Segmentierte OLEDs stellen eine einfache Art dar, größere Teilflächen einer Leuchtfläche einer Lichtquelle, hier insbesondere der Schlusslichtquelle, zu definieren, die unabhängig voneinander ansteuerbar und auch dimmbar sind. Grundsätzlich ist es selbstverständlich auch denkbar, andere Varianten heranzuziehen, beispielsweise LED-Matrizen, wobei die ersten und zweiten Leuchtbereiche beispielsweise durch einzelne LEDs und/oder Gruppen von LEDs der LED-Matrix gebildet werden können.

Als Umgebungssensor kann zweckmäßigerweise ein Radarsensor und/oder ein Lidarsensor und/oder eine Kamera und/oder ein Ultraschallsensor verwendet werden. Dabei ist es besonders vorteilhaft, im Heckbereich des Kraftfahrzeugs angeordnete, beispielsweise auch einem Einparkunterstützungssystem zugeordnete Ultraschallsensoren zu verwenden, die insbesondere eine bestimmte Erfassungsreichweite aufweisen können, die auch der oberen Grenze des vorgegebenen Abstandsbereichs entsprechen kann, so dass in Ausführungsbeispielen die reine Tatsache der Detektion eines anderen Verkehrsteilnehmers durch die Ultraschallsensoren bereits ausreichend sein kann, um die Zugehörigkeit zu dem vordefinierten Abstandsbereich sicherzustellen. Es können auch mehrere Sensortypen gemeinsam verwendet werden, wobei eine Sensordatenfusion eingesetzt werden kann. Radarsensoren und/oder Lidarsensoren sind insbesondere dann nützlich, wenn genaue Informationen über den nachfolgenden Verkehrsteilnehmer bestimmt bzw. verwendet werden sollen.

Neben dem Verfahren betrifft die vorliegende Erfindung auch ein Kraftfahrzeug, aufweisend eine Heckleuchte, die, insbesondere neben einer wenigstens einer weiteren Lichtfunktion zugeordneten Funktionslichtquelle, eine einer Schlusslichtfunktion zugeordnete Schlusslichtquelle mit mehreren, bezüglich des Betriebs und der Helligkeit unabhängig ansteuerbaren Leuchtbereichen aufweist, einen auf den Rückraum des Kraftfahrzeugs gerichteten Umgebungssensor und eine zur Ansteuerung der Heckleuchte ausgebildete Steuereinrichtung. Das Kraftfahrzeug zeichnet sich dadurch aus, dass die Steuereinrichtung zur Ausführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, so dass auch mit diesem die bereits genannten Vorteile erhalten werden können. Die Steuereinrichtung kann insbesondere wenigstens ein Steuergerät des Kraftfahrzeugs umfassen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine Heckleuchte des erfindungsgemäßen Kraftfahrzeugs,
- Fig. 3: das erfindungsgemäße Kraftfahrzeug in einer ersten Verkehrssituation,
- Fig. 4: den Betrieb der Heckleuchte in der ersten Verkehrssituation,
- Fig. 5: das erfindungsgemäße Kraftfahrzeug in einer zweiten Verkehrssituation, und
- Fig. 6: den Betrieb der Heckleuchte in der zweiten Verkehrssituation.

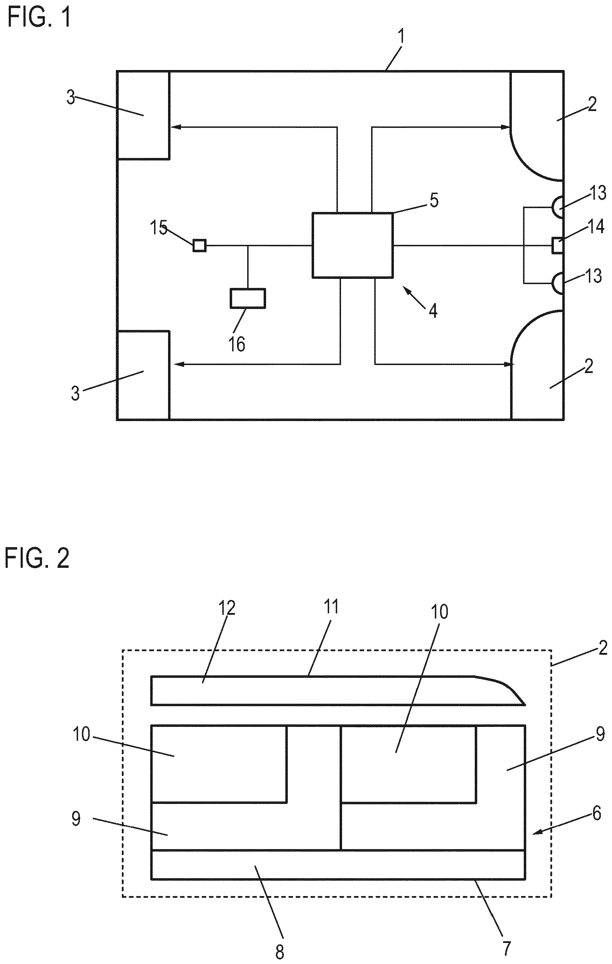

Fig. 1 zeigt eine Prinzipskizze eines erfindungsgemäßen Kraftfahrzeugs 1. Dieses weist eine Beleuchtungseinrichtung auf, die mehrere Außenleuchten umfasst, vorliegend insbesondere zwei Heckleuchten 2, die am Heck des Kraftfahrzeugs 1, im wesentlichen gegenüberliegend Scheinwerfern 3, angeordnet sind. Der Betrieb der Beleuchtungseinrichtung wird mittels einer Steuereinrichtung 4, die vorliegend ein Steuergerät 5 umfasst, gesteuert. Auch weitere, hier nicht näher gezeigte Außenleuchten können vorgesehen sein.

Fig. 2 zeigt den Aufbau einer Heckleuchte 2 genauer. Die Heckleuchte 2 dient hierbei der Umsetzung von zwei verschiedenen Lichtfunktionen, nämlich einer Schlusslichtfunktion und einer Bremslichtfunktion. Es sind auch Heckleuchten 2 denkbar, die weitere Lichtfunktionen umsetzen, beispielsweise zusätzlich eine Fahrtrichtungsanzeigerfunktion und/oder eine Rückfahrscheinwerferfunktion.

Im vorliegenden Ausführungsbeispiel weist die Heckleuchte 2 zur Umsetzung der Schlusslichtfunktion eine Schlusslichtquelle 6 auf, welche vorliegend durch eine segmentierte OLED 7 gebildet wird, deren Segmente verschiedene Leuchtbereiche 8, 9 und 10 bilden. Die Segmente und somit auch die Leuchtbereiche 8, 9, 10 sind unabhängig ansteuerbar und insbesondere auch unabhängig in ihrer Helligkeit steuerbar.

Zur Umsetzung der Bremslichtfunktion weist die Heckleuchte 2 ferner eine als der Bremslichtfunktion als weitere Lichtfunktion zugeordnete Bremslichtquelle 11 als Funktionslichtquelle auf, die vorliegend nur einen einzigen Leuchtbereich 12 aufweist. Selbstverständlich ist es grundsätzlich auch bezüglich der Bremslichtquelle 11 möglich, diese mit mehreren Leuchtbereichen 12 umzusetzen. Die Bremslichtquelle 11 kann durch ein oder mehrere LEDs, ein oder mehrere OLEDs oder eine herkömmliche Lichtquelle umgesetzt sein. Es sei noch angemerkt, dass die Schlusslichtquelle 6 mi ihren Leuchtbereichen 8, 9, 10 beispielsweise auch durch eine LED-Matrix umgesetzt werden kann, wobei die segmentierte OLED 7 jedoch bevorzugt ist.

Zurückkehrend zu Fig. 1 ist die Steuereinrichtung 4 dazu eingerichtet, ein erfindungsgemäßes Verfahren durchzuführen. Insbesondere überprüft die Steuereinrichtung 4 mithin ein Zuschaltkriterium, welches durch Auswertung von Sensordaten verschiedener auf den Rückraum des Kraftfahrzeugs 1 gerichteter Umgebungssensoren 13, 14 zumindest überprüft, ob sich ein weiterer Verkehrsteilnehmer mit derselben Fahrtrichtung innerhalb eines vordefinierten Abstandsbereichs zum Heck des Kraftfahrzeugs 1 befindet. Auch weitere Zusatzbedingungen und/oder Randbedingungen können überprüft werden, weshalb die Steuereinrichtung 4 auch mit weiteren Sensoren und/oder Fahrzeugsystemen verbunden sein kann, im vorliegenden Fall beispielhaft wenigstens mit einem Lichtsensor 15 und einem eine Information zur aktuellen Geschwindigkeit des Kraftfahrzeugs 1 liefernden Fahrzeugsystem 16. Zusatzbedingungen können beispielsweise überprüfen, ob die Relativgeschwindigkeit des Verkehrsteilnehmers (soweit detektiert) zu dem eigenen Kraftfahrzeug innerhalb eines ersten Geschwindigkeitsintervalls liegt, ob die Geschwindigkeit des eigenen Kraftfahrzeugs innerhalb eins zweiten Geschwindigkeitsintervalls liegt, ob eine Heckklappe des Kraftfahrzeugs geschlossen ist, ob die Zündung angeschaltet ist und/ob die mit dem Lichtsensor 15 gemessene Umgebungshelligkeit innerhalb eines Umgebungshelligkeitsintervalls liegt. Auch bezüglich der Lichtsteuerung interne Vorgänge können durch das Zuschaltkriterium ausgewertet werden, worauf noch genauer eingegangen werden wird.

Im dargestellten Ausführungsbeispiel kann es sich bei den Umgebungssensoren 13 beispielsweise um Ultraschallsensoren, bei dem Umgebungssensor 14 beispielsweise um einen Radarsensor oder einen Lidarsensor handeln. Dabei kann der Abstandsbereich so gewählt sein, dass er dem Erfassungsbereich der als Ultraschallsensoren ausgebildeten Umgebungssensoren 13 entspricht, so dass immer dann, wenn diese bei in Betrieb befindlichem Kraftfahrzeug 1 ein Objekt detektieren, davon ausgegangen werden kann, dass ein nachfolgender Verkehrsteilnehmer existiert. Radarsensoren und/oder Lidarsensoren können diesbezüglich genauere Informationen liefern, beispielsweise den Abstand zum nachfolgenden, weiteren Verkehrsteilnehmer und/oder dessen Geschwindigkeit/Relativgeschwindigkeit. Auch Kameras können als Umgebungssensoren 13, 14 eingesetzt werden.

Ist das Zuschaltkriterium erfüllt und wurden zuvor nicht bereits alle Leuchtbereiche 8, 9, 10 aus anderen Gründen mit maximaler Helligkeit betrieben, erhöht die Steuereinrichtung 4 für wenigstens einen zweiten der Leuchtbereiche 8, 9, 10, der zuvor dunkler als die anderen, ersten Leuchtbereiche 8, 9, 10 betrieben wurde, die Helligkeit, sei es, was bevorzugt ist, durch Zuschalten, wenn dieser Leuchtbereich zuvor nicht leuchtend betrieben wurde, oder sei es durch Aufdimmen. Dies geschieht jedoch so, dass für zumindest einen Anteil der Heckleuchte 2, der wenigstens die Schlusslichtquelle 6 umfasst, die Gesamthelligkeit (Gesamtintensität) unverändert bleibt.

Dabei sei in diesem Kontext noch angemerkt, dass auch die Art der Helligkeitserhöhung (und parallel zur Aufrechterhaltung der gleichen Gesamthelligkeit auch der Helligkeitserniedrigung anderer Leuchtbereiche) parametrierbar sein kann. So sind Ausführungsbeispiele denkbar, bei denen die Zielhelligkeit, auf die die Helligkeitserhöhung stattfinden soll, in Abhängigkeit von wenigstens einer die Verkehrssituation beschreibenden Größe gewählt wird, beispielsweise in Abhängigkeit von einem aus den Sensordaten bestimmten Abstand zu dem Verkehrsteilnehmer. Gleiches ist auch bezüglich der Dimmgeschwindigkeit des helligkeitserhöhenden Schaltvorgangs (und gegebenenfalls parallel stattfindender helligkeitserniedrigender Schaltvorgänge) möglich.

Durch den helligkeitserhöhenden Schaltvorgang, der bei Erfüllung des Zuschaltkriteriums durchgeführt wird, wird der weitere Verkehrsteilnehmer auf das eigene Kraftfahrzeug 1 sensibilisiert. In einer bestimmten, zweckmäßigen Ausgestaltung kann dies kontextgebunden erfolgen, in dem das Zuschaltkriterium zusätzlich überprüft, ob die Bremslichtfunktion (und/oder gegebenenfalls eine weitere in die Heckleuchte 2 integrierte Lichtfunktion) in Betrieb ist, so dass deren Hinweis- und/oder Warnfunktionalität unterstützt wird.

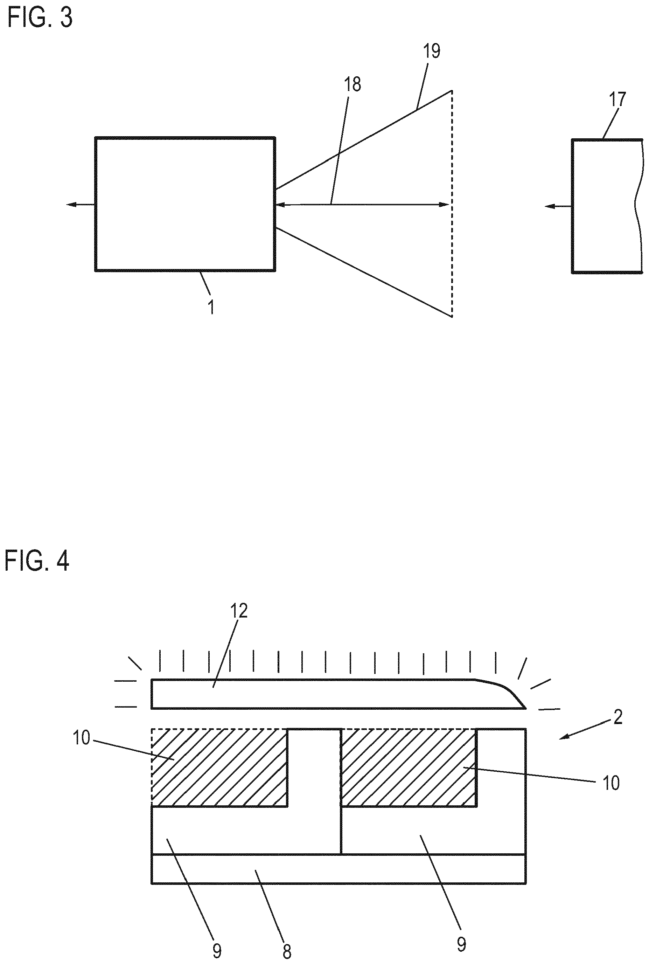

Die Fig. 3 bis 6 erläutern die Vorgehensweise anhand von Verkehrssituationen genauer. Dabei zeigt Fig. 3 eine erste Verkehrssituation, in der dem Kraftfahrzeug 1 in großem Abstand ein weiterer Verkehrsteilnehmer 17 nachfolgt. Mit anderen Worten befindet sich der Verkehrsteilnehmer 17 außerhalb eines Abstandsbereichs 18 im Rückraum des Kraftfahrzeugs 1, welcher beispielsweise über den Erfassungsbereich 19 der Umgebungssensoren 13, insbesondere Ultraschallsensoren, definiert sein kann. Fig. 4 zeigt das zugehörige Erscheinungsbild der Heckleuchte 2 (Normalbetriebszustand). Für das Schlusslicht sind die ersten Leuchtbereiche 8, 9 aktiviert, während die zweiten Leuchtbereiche 10 ausgeschaltet sind, was beispielsweise für ein charakteristisches Erscheinungsbild sorgen kann. Der Leuchtbereich 12 der Bremslichtquelle 11 leuchtet ungedimmt mit einer Normalhelligkeit.

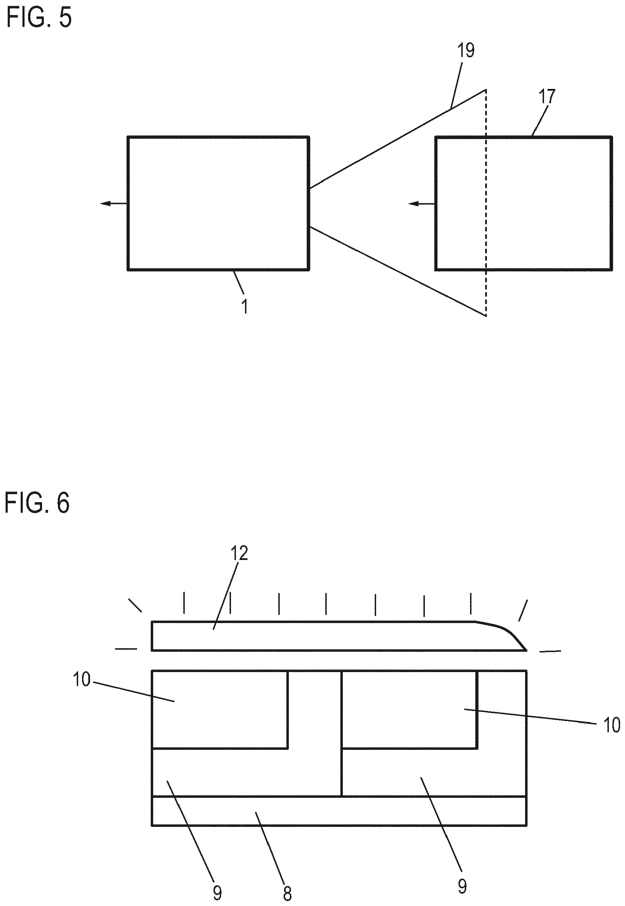

In der zweiten Verkehrssituation gemäß Fig. 5, die der ersten Verkehrssituation gemäß Fig. 3 beispielsweise folgen kann, indem sich der Verkehrsteilnehmer 17 annähert, wird der Verkehrsteilnehmer 17 im Abstandsbereich 18, konkret im Erfassungsbereich 19, detektiert. Der entsprechende Anteil des Zuschaltkriteriums ist mithin erfüllt. Betrachtet man das in Fig. 6 gezeigte Erscheinungsbild der Heckleuchte 2, wird davon ausgegangen, dass das Zuschaltkriterium insgesamt erfüllt ist, mithin beispielsweise auch auf die Geschwindigkeiten bezogene Zusatzbedingungen erfüllt sind und die Bremslichtfunktion aktiv ist. Demgemäß sind zu den ersten Leuchtbereichen 8, 9 nun auch die Leuchtbereiche 10 in dem helligkeitserhöhenden Schaltvorgang zugeschaltet worden. Das bedeutet, vorliegend werden alle Leuchtbereiche 8, 9, 10 der Schlusslichtquelle 6 betrieben. Nachdem ein Bremsvorgang des Kraftfahrzeugs 1 vorliegt, leuchtet auch die Bremslichtquelle, konkret der dortige eine Leuchtbereich 12, allerdings weniger hell als die Normalhelligkeit der Fig. 4.

Dabei sind konkret zwei Ausgestaltungen denkbar, um zu dem Ergebnis der Fig. 6 zu gelangen, in dem im Übrigen die ersten Leuchtbereiche 8, 9 und die zweiten Leuchtbereiche 10 der Schlusslichtquelle 6 allesamt gleich hell betrieben werden. Alternativ können die zweiten Leuchtbereiche 10 auch mit deutlich geringerer Helligkeit als die ersten Leuchtbereiche 8, 9 zugeschaltet werden.

In einer ersten Erfindungsvariante kann der Anteil, dessen Gesamthelligkeit unverändert bleiben soll, der Schlusslichtquelle 6 entsprechen. Das bedeutet dann, dass die Helligkeitserhöhung der zweiten Leuchtbereiche 10 durch eine Helligkeitserniedrigung der ersten Leuchtbereiche 8, 9 kompensiert wird, und zwar vorliegend beispielhaft derart, dass alle Leuchtbereiche 8, 9, 10 gleich hell leuchten. Unabhängig davon ist, beispielsweise aufgrund der Erfüllung eines Dimmkriteriums, die Helligkeit des Leuchtbereichs 12 reduziert, um den Sehkomfort des nachfolgenden Verkehrsteilnehmers 17 möglichst zu erhöhen. Die gegenüber der Normalhelligkeit der Bremslichtquelle 11 reduzierte Helligkeit wird dabei durch die sensibilisierende Wirkung des Zuschaltens der zweiten Leuchtbereiche 10 bevorzugt sogar überkompensiert.

In einer zweiten Erfindungsvariante erfasst der Anteil, dessen Gesamthelligkeit gleichbleiben soll, sowohl die Schlusslichtquelle 6 als auch die Bremslichtquelle 11, mithin alle Leuchtbereiche 8, 9, 10, 12. Dabei wird vorliegend konkret so vorgegangen, dass lediglich der Leuchtbereich 12 zur Kompensation des Zuschaltens der zweiten Leuchtbereiche 10 abgedimmt wird, jedoch derart, dass die Bremslichtquelle 11 noch immer heller leuchtet als die mit gleichmäßiger Helligkeit betriebene Schlusslichtquelle 6.

## Patentansprüche

1. Verfahren zum Betrieb einer Heckleuchte (2) eines Kraftfahrzeugs (1), wobei die Heckleuchte (2), insbesondere neben einer wenigstens einer weiteren Lichtfunktion zugeordneten Funktionslichtquelle (11), eine einer Schlusslichtfunktion zugeordnete Schlusslichtquelle (6) mit mehreren, bezüglich des Betriebs und der Helligkeit unabhängig ansteuerbaren Leuchtbereichen (8, 9, 10) aufweist, wobei durch wenigstens einen Umgebungssensor (13, 14) des Kraftfahrzeugs (1) andere, nachfolgende Verkehrsteilnehmer (17) im Rückraum des Kraftfahrzeugs (1) beschreibende Sensordaten aufgenommen werden,
**dadurch gekennzeichnet,**
**dass** bei Erfüllung wenigstens eines die Sensordaten auswertenden und die Anwesenheit wenigstens eines weiteren Verkehrsteilnehmers (17) innerhalb eines vordefinierten Abstandsbereichs (18) zum Heck des Kraftfahrzeugs (1) überprüfenden Zuschaltkriteriums ein helligkeitserhöhender Schaltvorgang, insbesondere ein Zuschalten und/oder ein Aufdimmen, eines zuvor nicht oder mit geringerer Helligkeit als wenigstens ein anderer, erster Leuchtbereich (8, 9) betriebenen zweiten Leuchtbereichs (10) der Schlusslichtquelle (6) derart vorgenommen wird, dass die ausgesendete Gesamthelligkeit eines wenigstens die Schlusslichtquelle (6) umfassenden Anteils der Heckleuchte (2) konstant bleibt, wobei
- der Anteil nur die Schlusslichtquelle (6) umfasst, wobei zur Kompensierung der Helligkeitserhöhung des wenigstens einen zweiten Leuchtbereichs (10) wenigstens ein erster Leuchtbereich (8, 9) in seiner Helligkeit reduziert wird, oder
- der Anteil neben der Schlusslichtquelle (6) die oder wenigstens eine Funktionslichtquelle (11) der Heckleuchte (2) umfasst, wobei zur Kompensierung der Helligkeitserhöhung des wenigstens einen zweiten Leuchtbereichs (10) die wenigstens eine Funktionslichtquelle (11) in ihrer Helligkeit reduziert wird.

2. Verfahren nach Anspruch 1, wobei die Heckleuchte (2) die Funktionslichtquelle (11) aufweist,
**dadurch gekennzeichnet,**
**dass** die wenigstens eine weitere Lichtfunktion aus der Gruppe umfassend eine Bremslichtfunktion und/oder eine Fahrtrichtungsanzeigerfunktion gewählt ist.

3. Verfahren nach Anspruch 1 oder 2, wobei der Anteil nur die Schlusslichtquelle (6) umfasst,
**dadurch gekennzeichnet,**
**dass** der wenigstens eine erste Leuchtbereich (8, 9) und der wenigstens eine zweite Leuchtbereich (10) dieselbe Gesamtfläche aufweisen, wobei für den Schaltvorgang ihre Helligkeiten getauscht werden, insbesondere in einem periodisch wiederholten Schaltvorgang.

4. Verfahren nach einem der vorangehenden Ansprüche, wobei der Anteil neben der Schlusslichtquelle (6) die Funktionslichtquelle (11) umfasst, **dadurch gekennzeichnet,**
**dass** die Helligkeitserhöhung durch den Schaltvorgang ausschließlich durch eine Helligkeitsreduzierung der Funktionslichtquelle (11) kompensiert wird.

5. Verfahren nach einem der vorangehenden Ansprüche, wobei die Heckleuchte (2) die Funktionslichtquelle (11) aufweist,
**dadurch gekennzeichnet,**
**dass** das Zuschaltkriterium nur bei zusätzlich festgestelltem Betrieb wenigstens der wenigstens einen weiteren Lichtfunktion der Heckleuchte (2) als erfüllt bewertet wird.

6. Verfahren nach einem der vorangehenden Ansprüche,
**dadurch gekennzeichnet,**
**dass** durch das Zuschaltkriterium zusätzlich wenigstens eine auf das eigene Kraftfahrzeug (1) und/oder den Verkehrsteilnehmer (17) und/oder Umgebungsbedingungen bezogene Zusatzbedingung überprüft wird.

7. Verfahren nach Anspruch 6,
**dadurch gekennzeichnet,**
**dass** die wenigstens eine Zusatzbedingung überprüft,
- ob die Relativgeschwindigkeit des Verkehrsteilnehmers (17) zu dem eigenen Kraftfahrzeug (1) innerhalb eines ersten Geschwindigkeitsintervalls liegt, und/oder
- ob die Geschwindigkeit des eigenen Kraftfahrzeugs (1) innerhalb eines zweiten Geschwindigkeitsintervalls liegt, und/oder
- ob eine Heckklappe des Kraftfahrzeugs (1) geschlossen ist, und/oder
- ob die Umgebungshelligkeit innerhalb eines Umgebungshelligkeitsintervalls liegt.

8. Verfahren nach einem der vorangehenden Ansprüche,
**dadurch gekennzeichnet,**
**dass** der Schaltvorgang des wenigstens einen zweiten Leuchtbereichs (10) auf eine erhöhte, vorgegebene und/oder in Abhängigkeit von einem aus den Sensordaten bestimmten Abstand zu dem Verkehrsteilnehmer (17) ermittelte Helligkeit und/oder mit einer vorgegebenen und/oder in Abhängigkeit von einem aus den Sensordaten bestimmten Abstand zu dem Verkehrsteilnehmer (17) ermittelten Dimmgeschwindigkeit erfolgt.

9. Verfahren nach einem der vorangehenden Ansprüche,
**dadurch gekennzeichnet,**
**dass** die ersten und zweiten Leuchtbereiche (8, 9, 10) durch Segmente wenigstens einer segmentierten organischen Leuchtdiode (7) realisiert sind.

10. Verfahren nach einem der vorangehenden Ansprüche,
**dadurch gekennzeichnet,**
**dass** der Umgebungssensor (13, 14) ein Radarsensor und/oder ein Lidarsensor und/oder eine Kamera und/oder ein Ultraschallsensor ist.

11. Kraftfahrzeug (1), aufweisend eine Heckleuchte (2), die, insbesondere neben einer wenigstens einer weiteren Lichtfunktion zugeordneten Funktionslichtquelle (11), eine einer Schlusslichtfunktion zugeordnete Schlusslichtquelle (6) mit mehreren, bezüglich des Betriebs und der Helligkeit unabhängig ansteuerbaren Leuchtbereichen (8, 9, 10) aufweist, einen auf den Rückraum des Kraftfahrzeugs (1) gerichteten Umgebungssensor (13, 14) und eine zur Ansteuerung der Heckleuchte (2) ausgebildete Steuereinrichtung (4),
**dadurch gekennzeichnet,**
**dass** die Steuereinrichtung (4) zur Ausführung eines Verfahrens nach einem der vorangehenden Ansprüche ausgebildet ist.

## Claims

1. Method for operating a tail light (2) of a motor vehicle (1), wherein the tail light (2) has, in particular in addition to a functional light source (11) assigned to at least one further light function, a rear light source (6) assigned to a rear light function having a plurality of luminous regions (8, 9, 10) that can be controlled independently with respect to the operation and the brightness, wherein at least one environment sensor (13, 14) of the motor vehicle (1) records sensor data describing other, following road users (17) in the area behind the motor vehicle (1),
**characterized**
**in that**, when at least one switch-on criterion evaluating the sensor data and checking for the presence of at least one further road user (17) within a predefined distance range (18) of the rear of the motor vehicle (1) is fulfilled, a brightness-increasing switching process, in particular switching on and/or dimming up, of a second luminous region (10) of the rear light source (6) previously not in operation or operated with less brightness than at least one other, first luminous region (8, 9) is performed in such a way that the total emitted brightness of a portion of the tail light (2) comprising at least the rear light source (6) remains constant,
wherein
- the portion comprises only the rear light source (6), wherein, in order to compensate for the increase in brightness of the at least one second luminous region (10), at least one first luminous region (8, 9) has its brightness reduced, or
- the portion comprises, in addition to the rear light source (6), the or at least one functional light source (11) of the tail light (2), wherein, in order to compensate for the increase in brightness of the at least one second luminous region (10), the at least one functional light source (11) has its brightness reduced.

2. Method according to Claim 1, wherein the tail light (2) has the functional light source (11),
**characterized**
**in that** the at least one further light function is chosen from the group comprising a brake light function and/or a direction indicator function.

3. Method according to Claim 1 or 2, wherein the portion comprises only the rear light source (6), **characterized**
**in that** the at least one first luminous region (8, 9) and the at least one second luminous region (10) have the same total area, wherein, for the switching process, the brightnesses of said luminous regions are swapped, in particular in a periodically repeated switching process.

4. Method according to one of the preceding claims, wherein the portion comprises, in addition to the rear light source (6), the functional light source (11), **characterized**
**in that** the increase in brightness due to the switching process is compensated for solely by reducing the brightness of the functional light source (11).

5. Method according to one of the preceding claims, wherein the tail light (2) has the functional light source (11),
**characterized**
**in that** the switch-on criterion is assessed as fulfilled only when operation at least of the at least one further light function of the tail light (2) has been additionally determined.

6. Method according to one of the preceding claims, **characterized**
**in that** the switch-on criterion additionally checks for at least one additional condition relating to the ego motor vehicle (1) and/or the road user (17) and/or environment conditions.

7. Method according to Claim 6,
**characterized**
**in that** the at least one additional condition checks for
- whether the speed of the road user (17) relative to the ego motor vehicle (1) lies within a first speed interval, and/or
- whether the speed of the ego motor vehicle (1) lies within a second speed interval, and/or
- whether a tailgate of the motor vehicle (1) is closed, and/or
- whether the environment brightness lies within an environment brightness interval.

8. Method according to one of the preceding claims, **characterized**
**in that** the switching process of the at least one second luminous region (10) takes place to an increased brightness, a predefined brightness and/or a brightness ascertained depending on a distance to the road user (17) determined from the sensor data and/or with a predefined dimming speed and/or a dimming speed ascertained depending on a distance to the road user (17) determined from the sensor data.

9. Method according to one of the preceding claims, **characterized**
**in that** the first and second luminous regions (8, 9, 10) are realized by segments of at least one segmented organic light-emitting diode (7).

10. Method according to one of the preceding claims, **characterized**
**in that** the environment sensor (13, 14) is a radar sensor and/or a lidar sensor and/or a camera and/or an ultrasonic sensor.

11. Motor vehicle (1), having a tail light (2) which has, in particular in addition to a functional light source (11) assigned to at least one further light function, a rear light source (6) assigned to a rear light function having a plurality of luminous regions (8, 9, 10) that can be controlled independently with respect to the operation and the brightness, an environment sensor (13, 14) directed towards the area behind the motor vehicle (1) and a control device (4) designed to control the tail light (2),
**characterized**
**in that** the control device (4) is designed to perform a method according to one of the preceding claims.

## Revendications

1. Procédé de fonctionnement d'un feu arrière (2) d'un véhicule automobile (1), le feu arrière (2) comportant, en particulier en plus d'une source de lumière fonctionnelle (11) associée à au moins une autre fonction de lumière, une source de lumière arrière (6) qui est associée à une fonction de lumière arrière et qui est pourvue d'une pluralité de zones de feu (8, 9, 10) pouvant être commandées indépendamment en termes de fonctionnement et de luminosité, des données de capteur qui décrivent d'autres usagers de la route suivants (17) dans l'espace arrière du véhicule automobile (1) étant acquises par au moins un capteur d'environnement (13, 14) du véhicule automobile (1),
**caractérisé en ce que**
si au moins un critère d'activation qui évalue les données de capteur et qui vérifie la présence d'au moins un autre usager de la route (17) dans une zone de distance prédéfinie (18) par rapport à l'arrière du véhicule automobile (1) est satisfait, un processus de commutation augmentant la luminosité, en particulier une activation et/ou une gradation, d'une deuxième zone de feu (10) de la source de lumière arrière (6) qui ne fonctionne tout d'abord pas ou qui fonctionne avec une luminosité plus faible que celle d'au moins une autre première zone de feu (8, 9) est déclenché de manière à ce que la luminosité totale émise d'une partie du feu arrière (2) comprenant au moins la source de lumière arrière (6) reste constante,
- la partie ne comprenant que la source de lumière arrière (6), une première zone de feu (8, 9) étant réduite en termes de luminosité afin de compenser l'augmentation de luminosité de l'au moins une deuxième zone de feu (10), ou
- la partie voisine de la source de lumière arrière (6) comprenant la ou au moins une source de lumière fonctionnelle (11) du feu arrière (2), l'au moins une source de lumière fonctionnelle (11) étant réduite en termes de luminosité afin de compenser l'augmentation de la luminosité de l'au moins une deuxième zone de feu (10) .

2. Procédé selon la revendication 1, le feu arrière (2) comportant la source de lumière fonctionnelle (11), **caractérisé en ce que**
l'au moins une fonction de lumière supplémentaire est choisie dans le groupe comprenant une fonction de lumière de freinage et/ou une fonction d'indicateur de direction de roulement.

3. Procédé selon la revendication 1 ou 2, la partie ne comprenant que la source de lumière arrière (6), **caractérisé en ce que** l'au moins une première zone de feu (8, 9) et l'au moins une deuxième zone de feu (10) ont la même surface totale, leurs luminosités étant échangées pour le processus de commutation, en particulier dans un processus de commutation répété périodiquement.

4. Procédé selon l'une des revendications précédentes, la partie voisine de la source de lumière arrière (6) comprenant la source de lumière fonctionnelle (11), **caractérisé en ce que**
l'augmentation de la luminosité due au processus de commutation n'est compensée que par une réduction de luminosité de la source de lumière fonctionnelle (11).

5. Procédé selon l'une des revendications précédentes, le feu arrière (2) comportant la source de lumière fonctionnelle (11),
**caractérisé en ce que**
le critère d'activation n'est évalué comme satisfait que si au moins l'au moins une autre fonction de lumière du feu arrière (2) est également en service.

6. Procédé selon l'une des revendications précédentes, **caractérisé en ce que**
au moins une condition supplémentaire concernant le véhicule automobile (1) proprement dit et/ou l'usager de la route (17) et/ou les conditions d'environnement est en outre vérifiée par le critère d'activation.

7. Procédé selon la revendication 6,
**caractérisé en ce que**
l'au moins une condition supplémentaire vérifie
- si la vitesse relative de l'usager de la route (17) par rapport au véhicule automobile (1) proprement dit est comprise dans un premier intervalle de vitesse, et/ou
- si la vitesse du véhicule automobile (1) proprement dit se situe dans un deuxième intervalle de vitesse, et/ou
- si un hayon du véhicule automobile (1) est fermé, et/ou
- si la luminosité ambiante se situe dans un intervalle de luminosité ambiante.

8. Procédé selon l'une des revendications précédentes, **caractérisé en ce que**
le processus de commutation de l'au moins une deuxième zone de feu (10) est effectué sur la base d'une luminosité spécifiée augmentée et/ou déterminée en fonction d'une distance par rapport à l'usager de la route (17) qui est déterminée à partir des données de capteur et/ou avec une vitesse de gradation spécifiée et/ou déterminée en fonction d'une distance par rapport à l'usager de la route (17) qui est déterminée à partir des données de capteur.

9. Procédé selon l'une des revendications précédentes, **caractérisé en ce que**
les première et deuxième zones de feu (8, 9, 10) sont réalisées par des segments d'au moins une diode électroluminescente organique segmentée (7).

10. Procédé selon l'une des revendications précédentes, **caractérisé en ce que**
le capteur d'environnement (13, 14) est un capteur radar et/ou un capteur lidar et/ou une caméra et/ou un capteur à ultrasons.

11. Véhicule automobile (1), comportant un feu arrière (2) qui comporte, notamment en plus d'une source de lumière fonctionnelle (11) associée à au moins une autre fonction de lumière, une source de lumière arrière (6) qui est associée à une fonction de lumière arrière et qui est pourvue d'une pluralité de zones de feu (8, 9, 10), un capteur d'environnement (13, 14) dirigé vers l'espace arrière du véhicule automobile (1) et un dispositif de commande (4) conçu pour activer le feu arrière (2), **caractérisé en ce que**
le dispositif de commande (4) est conçu pour mettre en œuvre un procédé selon l'une des revendications précédentes.
